Europäisches Patentamt

(19) European Patent Office

Office européen des brevets

(11) Publication number: **0 202 787**
**A2**

## (12) EUROPEAN PATENT APPLICATION

(21) Application number: **86303079.7**

(22) Date of filing: **23.04.86**

(51) Int. Cl.⁴: **G05D 23/19 , F24D 19/10**

(30) Priority: **25.04.85 US 727315**

(43) Date of publication of application:
**26.11.86 Bulletin 86/48**

(84) Designated Contracting States:
**BE CH DE FR GB IT LI NL**

(71) Applicant: **HONEYWELL INC.**
**Honeywell Plaza**
**Minneapolis Minnesota 55408(US)**

(72) Inventor: **Adams, John T.**
**12505 Village Circle Drive Apartment 461**
**St. Louis Missouri 63127(US)**

(74) Representative: **Altenburg, Udo, Dipl.-Phys. et al**
**Patent- und Rechtsanwälte**
**Bardehle-Pagenberg-Dost-Altenburg-Frohwitter & Partner Postfach 86 06 20**
**D-8000 München 86(DE)**

(54) **Temperature control system.**

(57) An adaptive control system uses a controller for controlling an air temperature treatment apparatus 2 at a reduced energy consuming level during periods of non-occupancy of a building 4 and for energizing the air treatment apparatus before occupancy so that a desired internal building temperature is reached by a time of occupancy. The controller includes a temperature sensor 8 for sensing an environmental temperature within the building, a control timer TMR1 responsive to the actual time-of-day for initiating the start of a pre-occupancy control cycle for the temperature treatment apparatus at a first predetermined real time, an adjustable timer TMR2 for defining a second predetermined time following the first time, and logic means (COMP, FF) for incrementing or decrementing the second predetermined time by an incremental time in response to a comparison of the environmental temperature reached in the building at the end of the sum of the first and second real times with a setpoint temperature (SP) representative of the desired building temperature.

## TEMPERATURE CONTROL SYSTEM

The present invention relates to a control system for temperature control within a building, and more specifically, to a system wherein the starting of heating or cooling is adjustable so as to attain a predetermined temperature at a predetermined time.

Present building internal environment control systems, whether for large or small buildings, are primarily concerned with conserving energy to minimize the cost of operating the building. A standard practice is the setback of the indoor temperature of a building during non-occupancy hours. In winter, this involves lowering the setpoint of the indoor temperature during periods of non-occupancy so that the heating system will not run as much during those periods. Conversely, in summer this involves raising the indoor temperature setpoint during non-occupancy periods so that the air conditioning system is not required to run as much during non-occupancy hours.

In order for the building to be confortable at the start of the occupancy period, previous control systems have attempted to provide an adaptive, i.e., self-adjusting, operation to determine at what time the air treatment system, whether it is an air heating furnace or an air conditioning system, must be turned on prior to the start of occupancy in order to bring the building indoor temperature to the desired occupied setpoint temperature. In such prior systems, the time at which the air treatment system is energized prior to the start of occupancy has often been determined by the outdoor air temperature. In winter, the time required to bring the indoor temperature to the desired setpoint temperature whe the outdoor air temperature is very low is greater than when the outdoor temperature is relatively high; i.e., the amount of time needed to reach the desired setpoint is inversley proportional to the outdoor temperature.

Conversely, energy can be saved by interrupting the operation of the air treatment equipment for a time prior to the start of non-occupancy, so that the inside space temperature drifts to a minimum established comfort level at the time when non-occupancy begins, and thereafter controlling the air treatment equipment at the non-occupancy setback temperature. Here again, the time prior to the start of non-occupancy when the air treatment equipment can be deenergized is determined as a function historically of outdoor temperature.

Although most of the known systems have used the outdoor temperature to determine the length of the startup time before occupancy and the stop time before non-occupancy required to maintain a desired comfort level during occupancy and a setback level during non-occupancy, there have been attempts to use building space temperature as a basis for determining the start and stop times. In such a system, the rate of change of the temperature during periods of occupancy and non-occupancy has been measured and used in order to determine optimum start and stop times.

However, all such systems are not fully adaptive since there are many factors other than outdoor temperature and/or rate of temperature change within the building which may affect optimum start and stop times. Further, since the start time is the more critical factor, based on the immediate effect on the occupants during the occupancy period, it is important to ensure that the setpoint temperature is attained by the start of occupancy at the latest, and the known systems therefore err on the side of ensuring this, at the cost of perhaps in fact attaining the setpoint temperature before the start of occupancy.

Accordingly the present invention provides a control system for controlling the temperature of a building, including preheat timer means for energizing the heating or cooling means for a preheat period to bring the temperature from a setback level to a normal level at the start of occupancy, characterized by means for sensing when the desired temperature is actually reached in relation to the start of the preheat period and adjusting means for adjusting the time setting of the preheat timer means in dependence thereon.

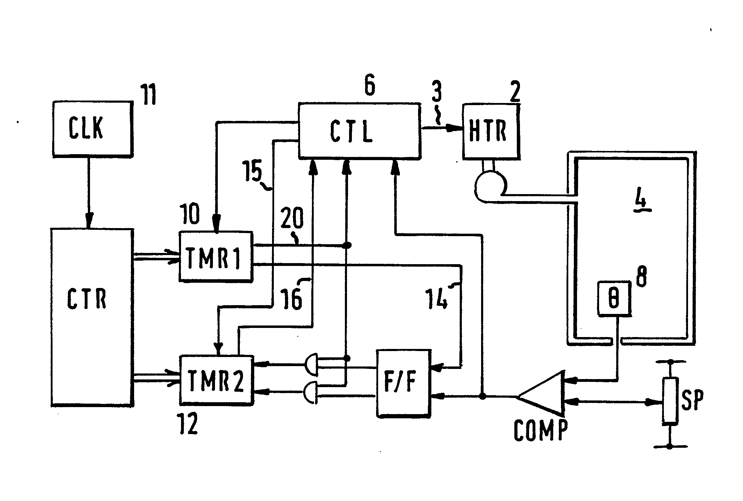

A control system embodying the invention will now be described, by way of example, with reference to the drawing, which is a block diagram of the system.

The system is arranged to control an air treatment apparatus 2 which maintains the internal air temperature of a building 4 in either setback operating mode or normal operating mode under control of control logic 6, a temperature sensor 8, and a main timer TMR1 10 which operates in conjunction with a timer counter CTR. The counter CTR counts clock signals from a clock signal source 11 to maintain a count representation of a 24-hour clock, and the main timer TMR1 detects preset selectable real times to enable the air treatment apparatus 2 to be operated by the control logic 6 via line 3 to maintain the appropriate temperature in the building 4.

The present system includes also a preheat timer TMR2 which is conveniently set initially to detect a time 2 hours prior to the start of normal operation (e.g. to detect the time 7.00 a.m. if the normal start of building occupancy is 9.00 a.m.). The output on line 16 of this timer TMR2 is used to start the air treatment apparatus 2 2 hours in advance, so that the temperature of the building 4 is brought up from the setback value to the normal occupancy value by the time normal occupancy starts. The output of time TMR1 on line 20 controls the normal operation.

The system also includes means for adjusting the length of the preheat period, i.e. varying it from the 2 hours referred to above, in response to whether the actual temperature in the building 4 reaches the desired level before or after the moment when timer TMR1 indicates the start of normal occupancy. This is achieved by means of the flip-flop FF, which is fed from a comparator COMP which is in turn fed from the temperature sensor 8 and a setpoint adjustment device SP. The timer TMR1 produces a clear signal on line 14 2 hours before the start of normal occupancy, and this clear signal resets the flip-flop FF. The flip-flop will be set by the signal from the comparator COMP when the desired temperature is reached. Thus the state of the flip-flop FF at the start of normal occupancy indicates whether the preheat period was started too early or not early enough. This state is sensed at the start of normal occupancy by the signal on line 20, which passes the state of the flip-flop at that moment on to the timer TMR2. The setting of the timer is either advanced or retarded by 15 minutes, to adjust the time at which preheat starts on the next cycle (i.e. the next day).

The timer TMR2 can also have its setting changed from the control circuitry 6 via line 15, e.g. to change it in step with any change which may be made to the main timer TMR1.

It will of course be realized that the adjustment to the setting of timer TMR2 in response to any deviation between the actual start of occupancy and the time when the temperature in the building 4 reaches the desired value for occupancy may be achieved in other ways, e.g. by measuring the deviation and using that to adjust the setting of timer TMR2.

It will also be realized that the use of the present system does not preclude the use, also, of preheat adjustment in accordance with outside temperature. Thus the preheat period may be adjusted in accordance with a sudden change of outside temperature in a predetermined manner; any deviation between that predetermined adjustment and the adjustment actually required by the building and its current conditions will then be rapidly corrected on succeeding days by the present system.

It will also be realised that the system can readily be implemented by software stored in a ROM and controlling a microprocessor which provides the required timing and control functions in combination with the sensor 8 and setpoint comparator COMP.

**Claims**

1. A control system for controlling the temperature of a building, including preheat timer means for energizing the heating or cooling means for a preheat period to bring the temperature from a setback level to a normal leval at the start of occupancy, characterized by means for sensing when the desired temperature is actually reached in relation to the start of the preheat period and adjusting means for adjusting the time setting of the preheat timer means in dependence thereon.

2. Apparatus according to claim 1 characterized in that the adjusting means effects a predetermined increment or decrement of the time setting.